# EUROPÄISCHE PATENTSCHRIFT

(11) **EP 2 767 730 B1**
(45) Veröffentlichungstag und Bekanntmachung des Hinweises auf die Patenterteilung: **20.04.2016**
(21) Anmeldenummer: 14155624.1
(22) Anmeldetag: 18.02.2014
(51) Int. Cl.: B60N 2/44, E05D 7/00, F16H 25/20, B60N 2/02

(54) **Verstellvorrichtung**
Adjustment device
Dispositif de réglage

(30) Priorität: 18.02.2013 DE 102013101572
(43) Veröffentlichungstag der Anmeldung: 20.08.2014
(73) Patentinhaber: Kokinetics GmbH, 65830 Kriftel (DE)
(72) Erfinder: Neudert, Michael, 55116 Mainz (DE)
(74) Vertreter: Patentanwälte und Rechtsanwalt Weiß, Arat & Partner mbB

(56) Entgegenhaltungen:
- EP-A2- 2 495 509
- DE-A1-102006 004 968
- DE-B1- 2 805 639
- DE-B4-102009 055 959
- FR-A1- 2 927 608
- JP-A- S57 140 485

## Beschreibung

Die Erfindung betrifft eine Verstellvorrichtung.

### Stand der Technik

Aus dem Stand der Technik wird insbesondere auf die DE 10 2009 055 959 B4 verwiesen, welche eine Verstellvorrichtung beschreibt. Weiter wird auf die JP 357140485 A verwiesen, welche ein Scharnier für eine Bustür beschreibt, die eine Patrone und eine Abtriebhülse umfasst, wobei die Abtriebhülse ein Drall-Innengewinde aufweist, die mit dem Drall-Aussengewinde der Patrone in Eingriff ist. Daneben wird auf die FR 2927608 A1 hingewiesen, welche eine Verstellvorrichtung für einen Sitz aufzeigt. In der EP 2 495 509 A2 wird eine Verstellvorrichtung für ein Solarpanel offenbart. Die DE 2805639 B1 zeigt eine Fahrzeugtür auf, welche über eine entsprechende Verstellvorrichtung geöffnet und geschlossen werden kann. Die DE 10 2006 004 968 A1 wiederum offenbart eine Verstellvorrichtung für die Rückenlehne eines Fahrzeugsitzes.

### Aufgabe der Erfindung

Aufgabe der Erfindung ist es, eine Verstelleinrichtung anzugeben, mit welcher zuverlässig die Verstellung von Scharnieren von Türen oder Fenstern jeder Art ermöglicht wird, wobei insbesondere ermöglicht werden soll die Verstelleinrichtung möglichst generell mit unterschiedlichsten Arten von Antrieben zu betätigen.

### Lösung der Aufgabe

Die Aufgabe wird mit dem Gegenstand des Anspruchs 1 gelöst.

Bevorzugt wird ein Scharnier an einer Tür, einem Fenster verstellt. Die Verstellung soll in der Neigung und/oder auch in der Höhe ermöglicht werden. Für die Anordnung der Antriebshülse mit mindestens einer Drall-Innennut und für weitere Teile wird ausdrücklich auf die Offenlegungsschrift DE 10 2009 055 959 B4 verwiesen.

Die erfindungsgemässe Verstellvorrichtung dient dazu ein Scharnier zu verstellen. Bei dem Scharniers kann es sich beispielsweise um ein Scharnier an einer Tür oder einem Fenster handeln.

Die Verstellvorrichtung weist eine axial unverschieblich und drehfest gelagerte Antriebshülse auf, die wiederum mindestens eine erste Drall-Innennut aufweist. Weiter ist eine Patrone vorhanden, die ein erstes Drall-Aussengewinde aufweist, das mit der ersten Drall-Innennut in Eingriff ist. Daneben weist eine erfindungsgemässe Verstellvorrichtung eine Abtriebshülse auf, die mindestens eine zweite Drall-Innennut umfasst, die mit einem zweiten Drall-Aussengewinde der Patrone in Eingriff ist.

Neu an der Erfindung ist der Umstand, dass die Patrone andernends eines zugeorndneten Widerlagers eine Linearkraftaufnahme umfasst. In diesem Zusammenhang ist von Belang, dass die Linearkraftaufnahme einends an der Patrone ausgebildet ist und andernends das Widerlager zu der Patrone zugeordnet ist. Das Widerlager ist derart zugeordnet, dass die Abtriebshülse nicht axial ausweichen kann.

Die Linearkraftaufnahme weist in einem Ausführungsbeispiel ein Kupplungslement zur Kopplung eines Linearantriebs auf. Das Kupplungselement kann in unterschiedlichen Varianten ausgeführt sein: Denkbar ist beispielsweise, dass das Kupplungselmement aus einem nachgiebigen Ring bestehen kann, der wiederum mit einer Aufnahme des Linearantriebs zusammenwirkt. Als Zusammenwirken oder in Wirkverbindung stehen ist hier eine Koppelung des Linearantrieb mit der Linearkraftaufnahme der Patrone.

In einem erfindungsgemässen Ausführungsbeispiel ist das Widerlager derart angeordnet, dass die linear wirkende Kraft des Linearantriebs im Wesentlichen rechtwinklig auf das Widerlager wirkt. Der Linearantrieb wirkt linear auf die Linearkraftaufnahme der Patrone und die aufgenommene Kraft veranlasst die Patrone zu einer zwar drehenden aber linearen Bewegung hin zu dem Gegenlager.

Als Linearantrieb, welche auf die Linearkraftaufnahme wirken können, kommt beispielsweise ein Linearversteller, ein Hydraulikzylinder, ein Pneumatikzylinder, ein Stössel oder ein linear verstellbarer Nocken in Betracht.

Die Abtriebshülse bietet dabei den Vorteil, dass das Übersetzungsverhältnis noch einmal verändert werden kann. Hierzu ist vorzugsweise mindestens eine zweite Drall-Innennut an der Abtriebshülse vorgesehen, die mit einem zweiten Drall-Aussengewinde der Patrone in Eingriff ist. Dieses zweite Dralf-Aussengewinde und die Antriebshülse sind der in Bezug genommenen Anmeldung nicht zu entnehmen.

Das zweite Drall-Aussengewinde ist vorzugsweise gegenläufig zu dem ersten Drall-Aussengewinde angeordnet. Auf diese Weise ergibt sich die vorteilhafte Wirkung, dass sich ein Übersetzungsverhältnis der Antriebsspindel auf die Abtriebshülse nach Maßgabe einstellbar ist. Das zweite Drall-Aussengewinde ist vorzugsweise axial versetzt angeordnet. Dies bietet den Vorteil, dass die Abtriebshülse koaxial auf der Patrone angeordnet werden kann.

Die Abtriebshülse ist vorzugsweise axial unverschieblich und drehbar gelagert. Durch die axiale Unverschieblichkeit wird die Abtriebshülse in eine Drehbewegung gezwungen, da sie bei einer Drehbewegung oder bei einer axialen Bewegung der Patrone nicht axial ausweichen" kann. Die drehbare Lagerung der Abtriebshülse ist vorteilhaft, da auf diese Weise die Abtriebhülse als Antriebselement für ein anzutreibendes Teil eines Scharniers verwendet werden kann. Vorteilhafterweise weist daher die Abtriebshülse eine Anschlussmöglichkeit auf.

Vorzugsweise ist die Abtriebshülse mit einem zu verstellenden Teil eines Scharniers verbindbar. Mögliche Verbindungsmöglichkeiten sind eine Verzahnung, wie in der Bezug genommenen Anmeldung gezeigt, oder ein Antriebszapfen oder es wird ein Hebel aufgeschweisst.

Ein Einsatz im Gebäudebereich zum Öffnen und Schliessen von Türen, Fenstern, etc ist möglich.

Die Erfindung beschreibt eine Möglichkeit zum Antrieb der Verstellvorrichtung nach der DE 10 2009 055 959 B4 mit unterschiedlichsten Arten von linear wirkenden Antrieben. Diese Erweiterung ist z.B. vorteilhaft, wenn bei einem Anwendungsfall ein Linearantrieb nötig ist

Hintergrund ist, dass bei der Ausführung nach der DE 10 2009 055 959 B4 Selbsthemmung an der Gewindespindel auftritt und das Getriebe somit nicht rücktreibbar ist. Die Schnittstelle zwischen Hülsen und darin laufender Patrone ist üblicherweise nicht selbsthemmend ausgeführt, d.h. dass bis dorthin das Getriebe noch rücktreibbar ist.

Bei der hier beschriebenen Erfindung treiben die unterschiedlichen linear wirkenden Antriebe direkt die Patrone an. Die Übertragung von der Patrone auf Abtriebshülse erfolgt wieder wie bei der DE 10 2009 055 959 B4 beschrieben.

### Figurenbeschreibung

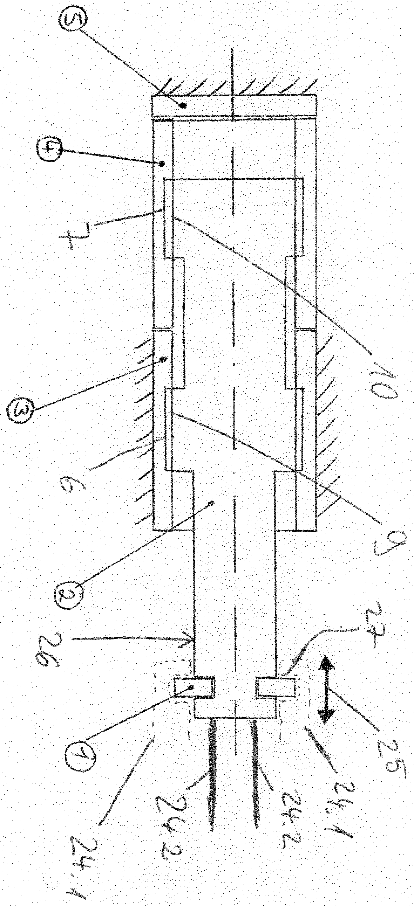

Weitere Vorteile, Merkmale und Einzelheiten ergeben sich aus der nachfolgenden Beschreibung der einzigen Figur.

In der Figur sind schematisch in einer Schnittdarstellung verschiedener Teile einer erfindungsgemässen Verstellvorrichtung gezeigt.

Der Kern der Verstellvorrichtung wird durch eine Patrone 2 gebildet. Im Betriebszustand sind auf der Patrone 2 eine Antriebshülse 3 und eine Abtriebshülse 4 angeordnet. Die Antriebshülse 3 weist eine erste Drall-Innennut 6 auf. Es sollte hinzugefügt werden, dass, soweit in dieser Anmeldung von der Drall-Innennut die Rede ist, auch mehrere Drall-Innennuten, gemeint sein können. Dasselbe gilt für das später beschriebene Drall-Aussengewinde auf der Patrone 2. Die Abtriebshülse 4 weist eine Drall-Innennut 7 auf.

Für die folgende Beschreibung der Erfindung wird ausdrücklich auf die DE 10 2009 055 959 B4 verwiesen insbesondere auf die Figuren und die dazugehörigen Figurenbeschreibungen.

Die erfindungsgemässe Verstellvorrichtung weist die axial unverschieblich und drehfest gelagerte Antriebshülse 3 auf, die wiederum mindestens eine erste Drall-Innennut 6 aufweist. Ausserdem weist die Patrone 2 ein erstes Drall-Aussengewinde 9 auf, das mit der ersten Drall-Innennut 6 in Eingriff ist.

Daneben ist die Abtriebshülse 4 zu erkennen, die mindestens eine zweite Drall-Innennut 7 aufweist, die mit einem zweiten Drall-Aussengewinde 10 der Patrone 2 in Eingriff ist.

Die Abtriebshülse 4 weist ein zweites Drall-Innengewinde 7 auf und ist axial unverschieblich, jedoch verdrehbar angeordnet. Die Abtriebshülse 4 dient dazu, als Antriebselement beispielsweise für ein Scharnier zu dienen. Hierzu kann die Abtriebshülse 4 beispielsweise einen Verzahnungsring aufweisen

In der Figur sind ein erstes Drall-Aussengewinde 9 und ein zweites Drall-Aussengewinde 10 an der Patrone 2 gezeigt. Das erste Drall-Aussengewinde 9 ist dazu vorgesehen, mit der ersten Drall-Innennut 6 der Antriebshülse 3 in Eingriff zu stehen, wobei das zweite Drall-Aussengewinde 10 dazu vorgesehen ist, mit der Innennut 7 der Abtriebshülse 4 in Eingriff zu stehen.

Im Betrieb wird durch den Linearantrieb 24.1 oder 24.2 eine Linearkraftaufnahme 26 betätigt, d.h., dass die Linearkraftaufnahme 26, welche einstückig mit der Patrone 2 ausgebildet ist, linear verschoben wird. Das lineare Verschieben findet dabei in Richtung eines Widerlagers 5 statt. Dabei wird die Patrone 2 axial verschoben. Durch diese Axialverschiebung der Patrone 2 wird unter Berücksichtigung der Tatsache, dass die Antriebshülse 3 axial unverschieblich und verdrehfest gelagert ist, die Patrone 2 ausserdem in eine Drehbewegung versetzt. Durch Einwirken sowohl der Axialverschiebung der Patrone 2 als auch der Drehbewegung der Patrone 2 auf die axial unverschieblich angeordnete, jedoch verdrehbar gelagerte Abtriebshülse 4 wird die Abtriebshülse 4 in eine Verdrehung versetzt, welche die doppelte Drehwinkelgeschwindigkeit, wie die Verdrehung der Patrone 2 aufweisen kann. Dabei ist zu berücksichtigen, dass das erste Drall-Aussengewinde 9 und das zweite Drall-Aussengewinde 10 gegenläufig, jedoch mit gleicher Steigung auf der Patrone 2 angeordnet sind.

Die gleiche Steigung ist bei typischen Ausführungsformen der Erfindung vorgesehen für die Drall-Aussengewinde 9 und 10. Es ist jedoch auch möglich, unterschiedliche Steigungen vorzusehen, um andere Übersetzungsverhältnisse zu erreichen. Dabei können auch zwei unterschiedliche, jedoch gleichgerichtete Steigungen vorgesehen sein, falls besonders grosse Übersetzungen erwünscht sind.

Der Linearantrieb 24.1 weist eine Aufnahme 27 auf. Diese Aufnahme 27 steht in Wirkverbindung mit dem Kupplungselement 1 der Linearkraftaufnahme 26. Eine weitere Alternative für den Linearantrieb 24.1 ist der Linearantrieb 24.2, welcher im Wesentlichen aus einem oder mehreren Stössel besteht, welche auf die Linearkraftaufnahme 26 mechanisch einwirken.

Das Widerlager 5 ist derart angeordnet, dass die axiale Verschiebung der Patrone 2 im Wesentlichen rechtwinklig auf das Widerlager 5 trifft. Dabei ist das Widerlager 5 in einem bevorzugten Ausfühungsbeispiel mit der Antriebshülse 3 verbunden.

Eine weitere Möglichkeit ist, die Erfindung für einen beidseitigen Lehnenantrieb einzusetzen, wobei in diesem Fall die Antriebsspindel durchgängig ausgebildet ist und auf beiden Seiten eine erfindungsgemässe Verstellvorrichtung in einer der oben beschriebenen bevorzugten Ausführungsformen verwendet wird.

Grundsätzlich ist es auch denkbar, dass die Patrone 2 zumindest zwei Linearkraftaufnahmen 26 aufweisen kann, welche jeweils einends und andernends der Patrone 2 angeordnet sind, wobei dann das Widerlager 5 der einends angeordneten Linearkraftaufnahme 26 andenends angeordnet ist und das Widerlager 5 der andernends angebrachten Linearkraftaufnahme 26 einends angeordnet ist. Dies kann beispielsweise dadurch realisiert werden, dass der Linearantrieb 24, welcher jeweils auf die einends oder andernends angeordnete Widerlager durchgreifen kann. Bei dieser Anordnung wäre vorteilhaft, dass eine exakte axiale Justierung der Verstellvorrichtung möglich ist.

### Bezugszeichenliste

1. Kupplungselement
2. Patrone
3. Antriebshülse
4. Abtriebshülse
5. Widerlager
6. Drall-Innennut
7. Drall-Innennut
9. Drall-Aussengewinde
10. Drall-Aussengewinde
24. Linearantrieb
25. Pfeil
26. Linearkraftaufnahme
27. Aufnahme

## Patentansprüche

1. Verstellvorrichtung für ein Scharnier einer Tür oder eines Fensters im Gebäudebereich mit
- einer axial unverschieblich und drehfest gelagerten Antriebshülse (3), die mindestens eine erste Drall-Innennut (6) aufweist,
- einer Patrone (2), die ein erstes Drall-Aussengewinde (9) aufweist, das mit der ersten Drall-Innennut (6) in Eingriff ist,
- eine Abtriebshülse (4), die mindestens eine zweite Drall-Innennut (7) aufweist, die mit einem zweiten Drall-Aussengewinde (10) der Patrone (2) in Eingriff ist, wobei die Patrone (2) andernends eines zugeorndneten Widerlagers (5) eine Linearkraftaufnahme (26) umfasst.

2. Verstellvorrichtung nach Anspruch 1, **dadurch gekennzeichnet, dass** die Linearkraftaufnahme (26) ein Kupplungselement (1) zur Kopplung eines Linearantriebs (24) aufweist.

3. Verstellvorrichtung nach Anspruch 1 oder 2, **dadurch gekennzeichnet, dass** der Linearantrieb (24) eine Aufnahme (27) aufweist.

4. Verstellvorrichtung nach Anspruch 3, **dadurch gekennzeichnet, dass** eine Aufnahme (27) mit dem Kupplungselement (1) in Wirkverbindung steht.

5. Verstellvorrichtung nach einem der vorigen Ansprüche, **dadurch gekennzeichnet, dass** das Widerlager (5) derart angeordnet ist, dass die linear wirkende Kraft des Linearantriebs (24) im Wesentlichen rechtwinklig auf das Widerlager (5) trifft.

## Claims

1. An adjustment device for a hinge of a door or window in the building sector, with
- a first drive sleeve (3) which is mounted axially non-displaceably and in rotation-resistant manner, which has at least one first twisted inner groove (6),
- a cartridge (2) which has a first twisted outer thread (9) which is engaged with the first twisted inner groove (6),
- an output sleeve (4) which has at least a second twisted inner groove (7) which is engaged with a second twisted outer thread (10) of the cartridge (2),
wherein
the cartridge (2) at the other end from an associated abutment (5) comprises a linear force pickup (26).

2. An adjustment device according to Claim 1, **characterised in that** the linear force pickup (26) has a coupling element (1) for coupling a linear drive (24).

3. An adjustment device according to Claim 1 or 2, **characterised in that** the linear drive (24) has a receptacle (27).

4. An adjustment device according to Claim 3, **characterised in that** a receptacle (27) is in operative connection with the coupling element (1).

5. An adjustment device according to one of the preceding claims, **characterised in that** the abutment (5) is arranged such that the linearly acting force of the linear drive (24) strikes the abutment (5) substantially at right-angles.

## Revendications

1. Dispositif de réglage d'une charnière de porte ou de fenêtre dans le domaine du bâtiment avec
- un manchon d'entraînement monté de manière axialement immobile et immobile en rotation (3) présentant au moins une première rainure de torsion intérieure (6),
- une cartouche (2) présentant un premier filetage de torsion (9) qui vient en prise avec la première rainure de torsion intérieure (6),
- un manchon de sortie (4) qui présente au moins une deuxième rainure de torsion intérieure (7) qui vient en prise avec un deuxième filetage de torsion (10) de la cartouche (2),
dans lequel
la cartouche (2) comporte, à l'autre extrémité d'une butée (5) associée, un boîtier de réception de force linéaire (26).

2. Dispositif de réglage selon la revendication 1, **caractérisé par le fait que** le boîtier de réception de force linéaire (26) présente un élément de couplage (1) destiné à coupler un actionneur linéaire (24).

3. Dispositif de réglage selon la revendication 1 ou 2, **caractérisé par le fait que** l'entraînement linéaire (24) présente un boîtier de réception (27).

4. Dispositif de réglage selon la revendication 3, **caractérisé par le fait qu'**un boîtier de réception (27) est en liaison active avec l'élément de couplage (1).

5. Dispositif de réglage selon l'une des revendications précédentes, **caractérisé par le fait que** la butée (5) est disposée de sorte que la force, agissant de manière linéaire, de l'entraînement linéaire (24) s'exerce sensiblement à angle droit sur la butée (5).
